Europäisches Patentamt

(19) European Patent Office

Office européen des brevets

(11) Numéro de publication: **0 094 664**

**B1**

(12) **FASCICULE DE BREVET EUROPEEN**

(45) Date de publication du fascicule du brevet: **07.12.88**

(51) Int. Cl.⁴: **B 60 T 1/10,** B 60 K 9/00

(21) Numéro de dépôt: **83104803.8**

(22) Date de dépôt: **16.05.83**

(54) Dispositif oléopneumatique de récupération d'énergie de freinage pour véhicule urbain.

(30) Priorité: **19.05.82 FR 8208855**

(43) Date de publication de la demande:
**23.11.83 Bulletin 83/47**

(45) Mention de la délivrance du brevet:
**07.12.88 Bulletin 88/49**

(84) Etats contractants désignés:
**BE DE GB IT SE**

(56) Documents cités:
**EP-A-0 047 642**
**FR-A-2 408 775**
**FR-A-2 419 436**
**FR-A-2 423 365**
**FR-A-2 467 095**
**FR-A-2 482 692**
**US-A-4 305 254**

(73) Titulaire: **RENAULT VEHICULES INDUSTRIELS**
**Société Anonyme dite:**
**129 rue Servient "La Part Dieu"**
**F-69003 Lyon (FR)**

(72) Inventeur: **Michel, Robert**
**12 rue de la Jonquière**
**F-75017 Paris (FR)**

(74) Mandataire: **Casalonga, Alain et al**
**BUREAU D.A. CASALONGA OFFICE JOSSE &**
**PETIT Morassistrasse 8**
**D-8000 München 5 (DE)**

Courier Press, Leamington Spa, England.

## Description

L'invention concerne la récupération de l'énergie de freinage sur un véhicule, en particulier sur un véhicule urbain tel qu'un autobus soumis à de fréquents freinages et démarrages.

En effet, dans les véhicules de transport en commun il s'avère particulièrement intéressant, en vue d'une économie de consommation, de récupérer l'énergie de décélération habituellement dissipée dans les freins et de la réintroduire sur la chaîne motrice dans la phase de mise en vitesse.

Certains véhicules de transport en commun utilisent pour cela un volant d'inertie, un accumulateur électrique ou un accumulateur oléopneumatique. Dans ce dernier cas on a recours en général à un élément hydrostatique ayant fonction de pompe ou de moteur pour remplir et vider l'accumulateur. Cet élément est rajouté à la transmission automatique classique, en général sur la prise de mouvement.

Dans le cas de transmissions utilisant des éléments hydrostatiques dans la transmission elle-même, leur utilisation pour assurer la charge et la décharge de l'accumulateur oléopneumatique s'avère plus délicate, notamment dans le cas de transmissions dites à dérivation de puissance qui paraissent les seules à présenter à la fois la continuité et le bon rendement nécessaire à un véhicule de transport en commun.

Dans ce sens des réalisations connues équipent des transmissions continues du type à "'sortie couplée" où le branchement des machines hydrauliques aux roues se fait essentiellement par l'action d'un frein mécanique immobilisant un train différentiel. Toutefois, cette opération se traduit par des perturbations sur la transmission préjudiciables au confort longitudinal du véhicule et par ailleurs le rendement d'une telle transmission est plutôt moyen.

Parmi les transmissions hydrostatiques à dérivation de puissance, il en est une particulièrement intéressants, correspondante au préambule de la revendication 1 et décrite dans le brevet français 80 10 953 (2.482.692) au nom de la demanderesse pour une "transmission à variation continue à deux modes de fonctionnement". Une telle transmission est basée essentiellement sur l'utilisation d'un double différentiel, ou mécanisme à quatre arbres, dont deux sont couplés à des machines hydrostatiques, avec un étagement des rapports tel que la transmission puisse assurer une phase de démarrage sur convertisseur de couple hydrocinétique, suivi d'un mode de fonctionnement possédant un haut rendement par le fait que la puissance dérivée traversant les machines hydrostatiques représente une fraction faible de la puissance motrice.

Le but de l'invention est d'utiliser tous les éléments constitutifs d'une telle transmission pour assurer en outre le stockage et le déstockage de l'énergie de freinage dans un accumulateur oléopneumatique, sans que cela conduise à une complexité accrue de la mécanique de la transmission elle-même, différentiels et machines hydrostatiques.

Dans ce but, l'invention propose une solution caractérisée comme dans la seconde partie de la revendication 1.

L'invention consiste à combiner, avec les organes mécaniques et hydrauliques d'une transmission du type précité et au moins un réservoir d'accumulation oléopneumatique, une logique électronique actionnant des organes de commutation électrohydrauliques de manière à connecter entre eux les divers organes, notamment les pompes et moteurs hydrauliques et le réservoir accumulateur, afin d'obtenir les diverses phases souhaitées de freinage, avec ou sans récupération, et de traction hybride sur l'accumulateur oléopneumatique et le moteur thermique.

Mis à part les organe de commutation électrohydrauliques utilisés pour la commande des divers freins et embrayages, ainsi que des rapports volumétriques des moteurs et pompes hydrauliques, qui sont ceux déjà prévus et utilisés dans la transmission susvisée, l'invention prévoit comme organes de commutation électrohydrauliques supplémentaires essentiellement deux commutateurs électrohydrauliques inverseurs, à couplages parallèles et croisés, disposés le premier dans le circuit aller et retour réunissant la pompe hydrostatique au moteur hydrostatique, et le deuxième dans le circuit aller et retour réunissant la pompe à l'accumulateur oléopneumatique et à là réserve à basse pression.

Le détail des connexions et fonctions assurées apparaîtra dans la description qui va suivre d'un mode de réalisation pris comme exemple et décrit en référence au dessin annexé sur lequel:

la fig. 1 représente l'état de la technique de la solution mécanique retenue pour l'exemple cité;

la fig. 2 représente la schéma mécanique et hydraulique de cette transmission selon l'état de la technique;

la fig. 3 représente les courbes de variation des cylindrées des machines hydrauliques en fonction des rapports de transmission voulus toujours selon l'état de la technique;

la fig. 4 est un schéma analogue à celui de la fig. 2 montrant les modifications apportées par l'invention;

la fig. 5 représente la courbe théorique de variation des couples de transmission en fonction des rapports de transmission; et

la fig. 6 un schéma hydraulique plus détaillé de la réalisation.

L'invention, tout comme le brevet précité, est basée sur l'utilisation d'un mécanisme différential à quatre arbres 1, 2, 3, et 4. Dans l'exemple qui va suivre le mécanisme utilisé est différent de ceux déjà décrits dans le brevet précité, mais il s'agit également d'un mécanisme connu et il va de soi que l'invention s'appliquerait également à tout autre type de mécanisme à quatre arbres.

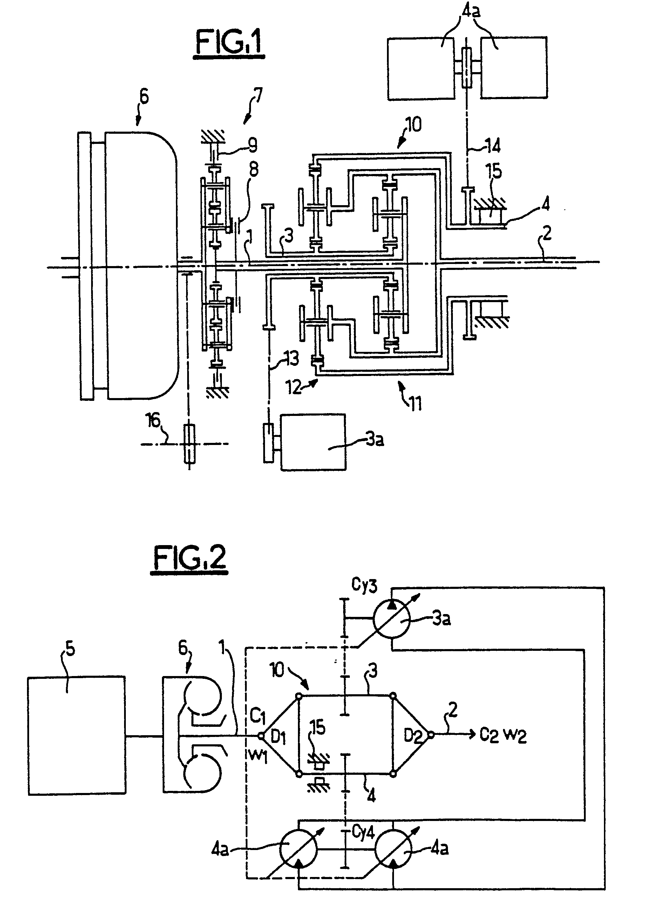

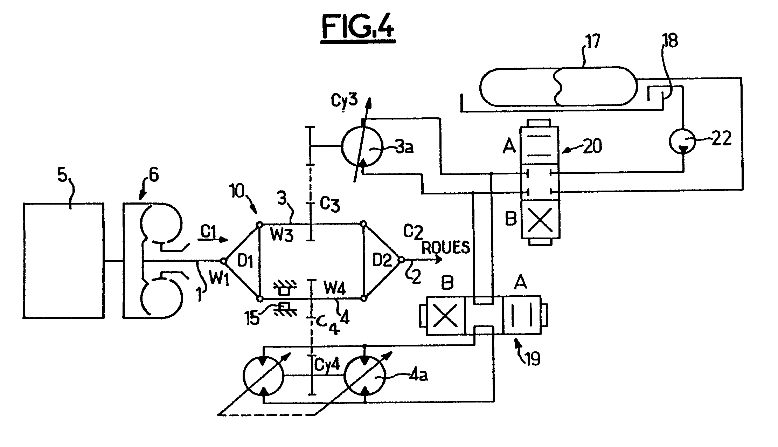

Selon l'état de la technique décrit dans le brevet précité, le moteur thermique 5 est relié à la transmission par l'intermédiaire d'un convertisseur de couple classique 6 muni d'un embrayage de pontage non représenté. L'arbre de turbine sortant du convertisseur de couple est relié à un inverseur 7 permettant d'assurer la commutation marche avant, marche arrière et qui est constitué par exemple par un train planétaire à deux groupes de satellites, la marche avant étant obtenus par solidarisation complète de l'ensemble par un embrayage multidisques commandé 8 tandis que la marche arrière s'obtient par blocage de la couronne sur le carter par un frein commandé 9. Comme exposé dans le brevet susvisé, ce mécanisme inverseur pourrait en variante être disposé sur l'arbre de sortie 2. Dans un but de simplification cet inverseur n'a pas été reporté sur les schémas des fig. 2 et 4.

Le mécanisme à quatre arbres retenu dans l'exemple choisi et désigné dans son ensemble par 10 est du type à trains Simpson à solaire commun. Les deux trains sont désignés respectivement dans leur ensemble par 11 et 12 sur la fig. 1.

L'arbre d'entrée 1 est relié au porte-satellite du train 11, tandis que l'arbre de sortie 2 relie à la fois la couronne du train 11 et le porte-satellites du train 12. L'arbre 3 constitue le solaire commun auc deux trains 11 et 12 et se trouve relié à une machine hydrostatique 3a par l'intermédiaire d'une transmission à chaîne 13. L'arbre 4, solidaire de la couronne du train 12, est relié par une autre chaîne 14 à un ensemble de deux machines hydrostatiques 4a montées en opposition. De plus, cet arbre 4 est muni d'une roue libre 15 agissant sur le carter de manière à interdire la rotation inverse de cet arbre et soulager ainsi les machines hydrauliques 4a dans la phase de démarrage.

Sur les fig. 2 et 4, ce mécanisme à quatre arbres est représenté schématiquement comme équivalent à deux différentiels classiques à trois arbres $D_1$ et $D_2$, mais ceci uniquement dans un but de schématisation car ces différentiels $D_1$ et $D_2$ ne sont pas équivalents séparément et respectivement aux trains 11 et 12, mais seulement dans leur ensemble.

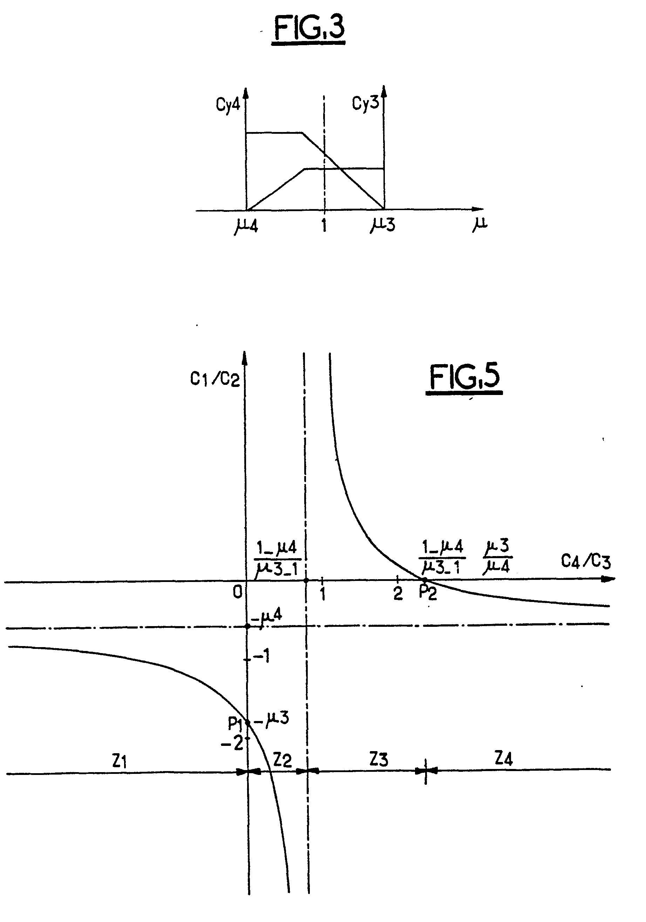

Le fonctionnement de cet ensemble, décrit dans le brevet précité, permet naturellement d'assurer une transmission pure sans aucune fonction de récupération d'énergie de freinage. Les machines 3a et 4a assurent alors respectivement le rôle de pompe et de moteurs dans la phase où le moteur thermique tracte le véhicule et inversement lorsque celui-ci décélère. Ces machines sont alors simplement reliées entre elles hydrauliquement comme représenté sur la fig. 2. Le réglage des cylindrées Cy3 et Cy4 de ces machines, effectué selon les courbes représentées sur la fig. 3, impose alors un rapport de vitesse $\mu = w2/w1$ entre les arbres de sortie 2 et d'entrée 1 de la transmission. Naturellement, cette commande des cylindrées des machines 3a et 4a, ainsi que des divers embrayages, tels que 8, et freins, tels que 9 et embrayage de pontage, est assurée par des moyens hydrauliques alimentés par une pompe auxiliaire 16, représentée sur la fig. 1, et par l'intermédiaire de moyens de commutation électrohydrauliques sous commande manuelle ou automatique qui n'ont pas été représentés en détail.

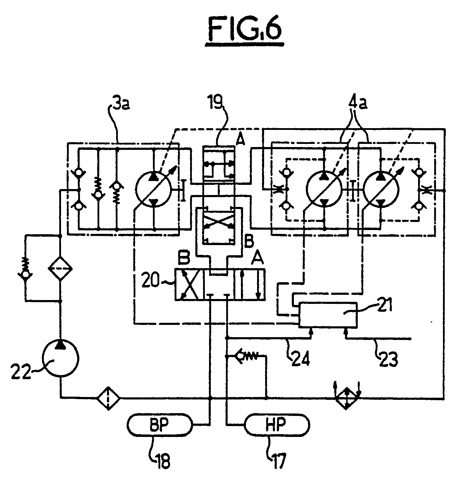

La présente invention, représentée schématiquement sur la fig. 4, consiste à combiner l'ensemble du mécanisme et des organes précédemment décrits avec d'une part un accumulateur oléopneumatique 17 à haute pression, associé à un réservoir 18 à basse pression, et d'autre part un ensemble de deux commutateurs électrohydrauliques 19 et 20 représentés sur la fig. 4 et commandés, en même temps que l'ensemble des autres commutateurs électrohydrauliques, par un calculateur électronique 21 représenté seulement sur la fig. 6.

Le commutateur 19, représenté schématiquement sur la fig. 4 par un distributeur hydraulique, est interposé dans le circuit aller et retour reliant les machines 3a et 4a de manière à permettre le raccordement direct ou le croisement de ces connexions. Toutefois le remplacement d'une au moins des machines hydrostatiques 3a et de par des machines du type à quatre cadrans ou inversibles, c'est-à-dire à cylindrées positives et négatives, serait un moyen équivalent à ce commutateur 19. Le commutateur 20, représenté également comme un distributeur hydraulique, est interposé dans le circuit de double canalisation aller et retour reliant la machine 3a à l'accumulateur haute pression 17 et à la réserve basse pression 18.

En plus de ces deux commutateurs, ou de leur équivalent, on remarque sur les fig. 4 et 6 la pompe de gavage 22 qui est déjà utilisée dans l'état de la technique pour maintenir en pression le circuit basse pression malgré les fuites. Dans le moteur hybride selon l'invention, cette pompe doit assurer la mise en basse pression de tout le débit absorbé par les éléments hydrauliques, ce qui peut justifier un dimensionnement différent. Cette pompe est de préférence constituée par une pompe centrifuge fournissant un basse pression de 10 bars, mais une pompe volumétrique à cylindrée variable pourrait également être utilisée. Ainsi, l'ensemble du réservoir basse pression 18 mis à l'atmosphère et de la pompe de gavage 22 joue le même rôle que l'accumulateur basse pression classique que l'on trouve dans les montages hybrides.

On va maintenant examiner dans le détail les diverses phases du fonctionnement de l'ensemble hybride selon l'invention et les conditions imposées au calculateur 21 pour réaliser ces diverses phases.

Une étude théorique du montage en dérivation de puissance hydraulique avec un mécanisme à quatre arbres montre que ce montage présente une particularité importante. Si l'on appelle $\mu3$ et $\mu4$ les rapports particuliers de $w2/w1$ qui annulent les vitesses w3 et w4 des arbres 3 et 4, la relation qui régit le rapport des couples "entrant" sur le mécanisme C1/C2 en fonction du rapport des couples appliqué par l'hydraulique C4/C3 peut être représentée par une hyperbole équilatère comme il apparaît sur la fig. 5. Cette courbe coupe l'axe vertical en un point $P_1$ d'ordonnée $-\mu 3$ et l'axe horizontal en un point $P_2$ d'abscisse

$$\frac{1-\mu 4}{\mu 3-1} \times \frac{\mu 3}{\mu 4},$$

et elle comporte une asymptote horizontale d'ordonnée $-\mu 4$ et une asymptote verticale d'abscisse

$$\frac{1-\mu 4}{\mu 3-1}.$$

Avec w2/w1 positif, ceci permet de déterminer sur le graphique de la fig. 5 quatre zones de fonctionnement:

— la zone Z1 est la zone utlisée en transmission pure en fonctionnement entre les deux points privilégiés d'adaptation ($\mu 4$ et $\mu 3$);

— la zone Z2 est une zone de régénération de puissance en transmission pure;

— la zone Z3 est telle que la somme des "puissances entrantes" par les arbres 1 et 2 va vers les arbres 3 et 4, ou réciproquement; enfin,

— la zone Z4 est telle que la différence des "puissances entrantes" (2—1) est injectée dans l'hydraulique (3+4) ou réciproquement.

Le point P2 est un point particulier où la couple C1 est nul quel que soit C2, ce qui signifie que l'entrée moteur est alors déconnectée du reste du mécanisme et que ce moteur fonctionne "flottant".

On rappelle que l'objectif de l'invention est d'utiliser les machines hydrauliques 3a et 4a pour stocker et restituer l'énergie de freinage présente sur l'arbre de sortie (C2w2). On va donc examiner successivement le stockage et la restitution de cette énergie.

Pour ce qui concerne le stockage:

Le véhicule étant animé d'une vitesse V correspondant à une vitesse d'arbre 2 w2, on commande le couple C2 sur cet arbre par un réglage du rapport des couples C4/C3 à une valeur telle que le couple C1 soit nul ou sensiblement nul comme on vient de le voir. Ceci est obtenu par un réglage du rapport des cylindrées Cy3 et Cy4 particulier puisque à tout instant on a

$$C3 = k3\ Cy3.p \quad et \quad C4 = k4\ Cy4.p$$

k3 et k4 étant des rapports fixes de transmission entre les machines hydrauliques 3a et 4a et les arbres correspondants du mécanisme à quatre arbres, transmission constituée dans l'exemple par les chaînes 13 et 14. Le circuit hydraulique a alors son commutateur 19 dans une position A telle que les trois machines 3a et 4a jouent le même rôle, et son commutateur 20 dans une position A correspondant au freinage. Ces deux positions A correspondant sur les schémas aux connexions parallèles. Les trois machines hydrauliques 3a et 4a jouent alors le rôle de pompe et débitent dans l'accumulateur oléopneumatique 17 à haute pression (jusqu'à 400 bars par exemple).

En plus du rapport des cylindrées Cy4/Cy3, la valeur absolue de la cylindrée Cy4 est déterminée par le calculateur 21 en fonction de l'indication reçue par 23 du couple de ralentissement à produire et de l'indication reçue par 24 de la pression régnant à tout instant dans l'accumulateur 17.

Ce couple de ralentissement obtenu par l'hydraulique se trouve par ailleurs conjugé à l'action de freinage générale et vient se déduire du couple des freins classiques agissant sur l'essieu considéré, comme cela se fait d'une manière connue dans les freinage dits conjugués. Ceci permet d'assurer à tout instant le freinage de sécurité quel que soit le niveau de remplissage de l'accumulateur et n'altère pas l'équilibre d'adhérence nécessaire à la tenue de route.

Par ailleurs, lors de cette décélération à couple contrôlé, le moteur thermique 5 se trouve régulé en vitesse pour maintenir à tout instant, donc pour chaque vitesse du véhicule, une vitesse au moteur thermique de mainière que les éléments hydrauliques 3a et 4a ainsi que le mécanisme 10 ne prennent pas des vitesses anormales et que l'effet de ralentissement soit suffisant. Ce réglage peut par exemple correspondre à la vitesse maximale du moteur thermique.

Pour assurer cette régulation on peut soit utiliser une pompe à injection de carburant du type toute vitesse dont l'indexage pour chaque vitesse du véhicule est fourni par le calculateur 21, soit plus avantageusement en réglant le rapport Cy4/Cy3 non plus au point P2 qui annule exactement C1 mais un peu plus à droite dans la zone Z4 par diminution de la cylindrée Cy3. Le moteur participe alors par son couple de frein au ralentissement du véhicule sans consomer de carburant.

Ce fonctionement est assuré jusqu'au dépontage du moteur. Au-delà, c'est-à-dire pour les basses vitesses du véhicule, l'emballement de l'arbre 1 qui n'est plus chargé par la turbine du convertisseur de couple (6), redéplace l'équilibre du rapport de cylindrées pour maintenir C1 nul. Le freinage est ainsi possible jusqu'au voisinage de la vitesse nulle du véhicule.

Si occasionnellement l'accumulateur haute pression 17 atteint la pression maximum de charge (par example 400 bars) l'ensemble des cylindrées, qui pour un couple donné a déjà décru du fait de l'augmentation de pression, est ramené à zéro par le calculateur 21 et le freinage mécanique prend le relais de la transmission puisqu'il n'est plus possible de récupérer davantage d'énergie. En outre en toute circonstance, dès que la vitesse du véhicule devient inférieure à une vitesse minimale de consigne, cette opération d'annulation de cylindrées se trouve commandée, le commutateur 20 revenant à sa position neutre dès que le freinage cesse.

Pour la restitution d'énergie:

A chaque démarrage du véhicule, le calculateur 21 teste le niveau de pression de remplissage de l'accumulateur 17. Si la pression est inférieure à une valeur de consigne, le calculateur commande les commutateurs 19 et 20 pour la mise en transmission pure, c'est-à-dire ave le commutation 19 en position B et le commutateur 20 au repos dans la phase traction.

Si l'accumulateur 17 est jugé suffisamment plein lors du test, le calculateur détermine son utilisation en plaçant le commutateur 19 en position A avec cylindrées nulles. Le démarrage sur le convertisseur de couple 6 s'effectue comme en traction pure, c'est-à-dire par blocage sur la roue libre 15. Si le conducteur désire freiner dans cette phase, le calculateur 21 repositionne le commutateur 20 dans la position ci-dessus.

A la fin de la phase de démarrage sur convertisseur, le calculateur détermine le pontage d'une manière classique par commande de l'embrayage de pontage pour un taux de glissement déterminé de la vitesse de l'arbre 1 par rapport à la vitesse de l'arbre moteur. Dans le cas présent cette action déclenche en même temps l'action de restitution en plaçant le commutateur 20 en position B.

Le couple désiré par le conducteur et transmis par 23 est traduit par le calculateur 21 en fonction de la pression régnant dans l'accumulateur et arrivant par 24 en une commande du rapport de cylindrées. Deux cas sont alors à considérer:

1°) Si la charge de l'accumulateur permet de satisfaire ce couple uniquement de manière hydraulique, le calculateur 21 agit pour neutraliser le moteur 5 et le rendre flottant comme exposé ci-dessus, le seul paramètre à régular étant sa vitesse en fonction de celle du véhicule. Cette action est effectuée comme exposé ci-dessus par l'actionnement de la pompe à injection ou par un léger décalage du point de fonctionnement au-delà du point P2. Le calculateur règle alors la valeur absolue des cylindrée Cy4 et Cy2 pour obtenir à chaque instant le couple désiré.

2°) Si au contraire la charge de l'accumulateur ne permet pas de réaliser le couple désiré, le rapport des cylindrées Cy4/Cy3 se trouve déplacé par diminution de Cy3, ce qui entraîne une participation du moteur qui, tout en restant régulé en vitesse comme dans le cas précédent, fournit un couple sur l'arbre 1, cette puissance s'additionnant à la puissance hydraulique.

Lorsque le conducteur module son accélération au cours d'un palier de vitesse ou passe au freinage, le commutateur 20 se trouve actionné dans un sens qui agit en isolant l'accumulateur puis en inversant les circuits.

Si la décharge parvient à amener l'accumulateur au seuil de pression minimum avant que le conducteur n'engage la phase de décélération, le calculateur à l'approche de cette situation avertit le conducteur puis procède à:
— l'isolation de l'accumulateur par action sur le commutateur 20 pour la ramener au point neutre, cette manoeuvre n'étant toutefois pas indispensable dans le cas d'accumulateurs pouvant aller jusqu'à une décharge sans volume mort;
— la remise en position neutre du commutateur 19;

— le réglage des cylindrées optimales en fonction de la vitesse du véhicule, ce qui s'effectue hors couple puisque le commutateur 19 est dans la position qui permet le rebouclage des débits; enfin
— la mise en position B du commutateur 19.

La même procédure peut être effectuée sur une demande de puissance maximum provoquée par exemple par le conducteur.

En définitive l'hybridation selon l'invention permet avec le minimum d'organes supplémentaires, essentiellement les commutateurs 19 et 20 ainsi que le calculateur 21, outre naturellement l'accumulateur oléopneumatique 17, d'assurer la récupération optimale d'énergie, dans les limites naturellement de la capacité de l'accumulateur, avec en outre un passage automatique et pratiquement continu par toutes les phases nécessaires de traction sur convertisseur, puis sans convertisseur avec ou sans restitution, et de freinage avec ou sans récupération, et cela par simple action sur les commutateurs ainsi que sur les commandes de cylindrées.

## Revendications

1. Transmission hydromécanique pour véhicule à moteur thermique (5) comportant, entre un arbre d'entrée (1) et un arbre de sortie (2) accomplée aux roues du véhicule, un mécanisme épicycloîdal (10) à quatre arbres (1, 2, 3, 4), et deux machines hydrostatiques à cylindrée variable (Cy3, Cy4) coopérant avec deux (3, 4) desdits quatre arbres:
ladite transmission étant du type dans lequel ledit mécanisme épicycloîdal (10) est à deux trains (11, 12) et quatre arbres (1, 2, 3, 4) et comprend
un premier train (11) comportant
— un porte satellite relié à l'arbre d'entrée (1) par une première liaison,
— une couronne reliée à la fois à l'arbre de sortie (2) et au porte satellite du deuxième train (12) par une deuxième liaison, et
— un planétaire relié à la fois au planétaire du deuximème train (12) et à une première (3a) des machines hydrostatiques par une troisième liaison (13), le deuxième train (12) comportant
— une couronne reliée à une deuxième (4a) des machines hydrostatiques par une quatrième liaison (14), ainsi qu'au carter par l'intermédiaire d'un accouplement à roue libre (15), et,
un convertisseur hydrocinétique de couple (6) étant relié en série respectivement au moteur thermique (5) et à l'arbre d'entrée (1) par une cinquième liaison et une sixième liaison, cette dernière particulièrement incluant un train inverseur (7) uniquement pour les évolutions en marche arrière;
toutes lesdites liaisons étant permanentes;
caractérisée par le fait:
que ladite transmission est combinée avec au moins un accumulateur hydropneumatique (17) avec lequel le circuit hydraulique des deux machines hydrostatiques est relié conditionnellement par deux distributeurs électrohydrauliques (19, 20), ces distributeurs ainsi que les cylindrées variables desdites machines hydrostatiques sont commandés par un calculateur électronique (21) appropriée,

que le calculateur électronique (21) est agencé de manière à autoriser un fonctionnement du véhicule en propulsion par moteur thermique (5) seul, par restitution de l'énergie de ledit accumulateur hydropneumatique (17), ou par les deux simultanément, et en ralentissement par retenue du moteur thermique seul, par transformation de l'énergie cinétique du véhicule en énergie hydropneumatique stockée dans ledit accumulateur hydropneumatique (17), ou les deux simultanément, sans nécessiter aucun découplage ou couplage mécanique, et que, dans la phase de traction hybride, les cylindrées (Cy3, Cy4) des machines hydrostatiques (3a, 4a) sont réglées de manière que le rapport (C4/C3) des couples ($C_4$ et $C_2$) des arbres correspondants (4,3) soit très proche d'un point (P2) correspondant à l'annulation du couple ($C_1$) de l'arbre d'entrée (1), et qu'il est prévu en outre un moyen de régulation de la vitesse du moteur thermique (5) par rapport à la vitesse du véhicule.

2. Transmission selon la revendication 1, caractérisé par le fait que le moyen de régulation agit sur l'alimentation du moteur thermique (5), notamment sur la pompe à injection.

3. Transmission selon la revendication 1, caractérisé par le fait que le moyen de régulation est constitué par le calculateur (21) lui-même qui agit pour déplacer le point de fonctionnement légèrement au-delà du point (P2) correspondant à l'annulation rigoureuse du couple (C1) de l'arbre d'entrée (1).

4. Transmission selon une des revendications précédentes, caractérisé par le fait que le convertisseur de couple (6) interposé entre le moteur thermique (5) et l'arbre d'entrée (1) du mécanisme epicycloïdal (10) comporte d'une manière connue un dispositif de pontage constitué par un embrayage commandé intervenant lorsque le glissement relatif entre les deux éléments du convertisseur (6) est tombé à une valeur minimale, et que lors de chaque démarrage les diverses phases de restitution et de récupération d'énergie commendées par le calculateur électronique (21) n'intervient qu'après la mise en service de cet embrayage de pontage.

**Patentansprüche**

1. Hydromechanischer Antrieb für Fahrzeug mit Wärmemotor (5), bestehend aus einem zwischen einer Antriebswelle (1) und einer an die Räder des Fahrzeugs gekoppelten Abtriebswelle (2) angeordneten epizykloidalen Mechanismus (10) mit vier Wellen (1, 2, 3, 4) und zwei hydrostatischen Maschinen mit variablem Hubraum (Cy3, Cy4), die mit zwei (3, 4) der genannten vier Wellen zusammenwirken; der genannte Antrieb entspricht dabei einer Ausführung, bei der der genannte epizykloidale Mechanismus (10) zwei Aggregate (11, 12) und vier Wellen (1, 2, 3, 4) aufweist, wobei das erste Aggregat (11) aus folgenden Teilen besteht:

— einem Plantenradträger, der in einer ersten Verbingung an die Antriebswelle (1) angeschlossen ist;

— einem Kranz, der zugleich an die Abtriebswelle (2) und an den Planetenradträger des zweiten Aggregats (12) in einer zweiten Verebindung angeschlossen ist, und

— einem Planetensatz, der in einer dritten Verbindung (13) zugleich an den Planetensatz des zweiten Aggregats (12) und an eine erste (3a) der hydrostatischen Maschinen angeschlossen · ist; das zweite Aggregat besteht aus

— einem Kranz, der in einer vierten Verbindung (14) an eine zweite (4a) der hydrostatischen Maschinen angeschlossen ist sowie über eine Freilaufkupplung (15) an das Kurbelgehäuse, und

— einem hydrokinetischen Drehmomentwandler (6), der in einer fünften und einer sechsten Verbindung in Reige mit dem Wärmemotor (5) bzw. mit der Antriebswelle (1) geschaltet ist, wobei letztere Verbindung insbesondere ein Umkehraggregat (7) umfaßt, das nur für die Rückfahrbewegungen bestimmt ist;

alle genannten Verbindung sind dabei ständige Verbindungen; dadurch gekennzeichnet, daß der genannte Antrieb mindestens mit einem hydropneumatischen Speicher (17) kombiniert ist, mit welchem der Hydraulikkreis der beiden hydrostatischen Maschinen durch zwei elektrohydraulische Verteiler (19, 20) bedingt verbunden ist,

daß diese Verteiler sowie die variablen Hubräume der genannten hydrostatischen Maschinen durch einen geeigneten Elektronikrechner (21) gesteuert werden,

daß der Elektronikrechner (21) so eingestellt ist, daß er einen Betrieb des Fahrzeugs in der Antriebsphase nur durch den Wärmemotor (5) zuläßt, oder durch Wiederherstellung der Energie in dem genannten hydropneumatischen Speicher (17) oder durch beide Möglichkeiten gleichzeitig, und in der Verzögerung durch Einsatz des Wärmemotors allein, oder durch Umwandlung der kinetischen Energie des Fahrzeugs in hydropneumatische Energie, die in dem genannten hydropneumatischen Speicher (17) gespeichert wird, oder durch beide Möglichkeiten gleichzeitig, ohne irgendeine mechanische Abkopplung oder Kopplung erforderlich zu machen, und

daß die Hubräume (Cy3, Cy4) der hydrostatischen Maschinen (3a, 4a) in der Phase des Hybridantriebs so gesteuert werden, daß das Verhältnis (C4/C3) der Momente (C4 und C3) der entsprechenden Wellen (4, 3) einem Punkt (P2) sehr nahe kommt, der der Aufhebung des Drehmoments (C1) der Antriebswelle (1) entspricht, und daß außerdem eine Steuerungsvorrichtung der Drehzahl des Wärmemotors (5) bezogen auf die Geschwindigkeit des Fahrzeugs vorgesehen ist.

2. Getriebe gemäß Anspruch 1, dadurch gekennzeichnet, daß die Steuerungsvorrichtung auf die Versorgung des Wärmemotors (5) wirkt, insbesondere auf die Injektionspumpe.

3. Getriebe gemäß Anspruch 1, dadurch gekennzeichnet, daß die Steuerungsvorrichtung aus dem Rechner (21) selber besteht, der sich einschaltet, um den Funktionspunkt geringfügig über den Punkt (P2) hinauszuverschieben, der der absoluten Aufhebung des Moments (C1) der Antriebswelle (1) entspricht.

4. Getriebe gemäß einem der vorausgehenden Ansprüche, dadurch gekennzeichnet, daß der Drehmomentwandler (6), der zwischen den Wärmemotor (5) und die Antriebswelle (1) des epizykloidalen Mechanismus (10) geschaltet ist, in bekannter Weise eine Überbrückungsvorrichtung umfaßt, bestehend aus einer gesteuerten Kupplung, die dann eingreift, wenn der relative Schlupf zwischen den beiden Elementen des Wandlers (6) auf einen minimalen Wert abgefallen ist, und daß bei jedem Start die verschiedenen Phasen der Wiederherstellung und Rückgewinnung der Energie, die von dem Elektronikrechner (21) gesteuert werden, erst nach Inbetriebnahme dieser Überbrückungskupplung zum Zuge kommen.

## Claims

1. A hydrochemical transmission system for a vehicle having a heat engine (5) and comprising, between an input shaft (1) and an output shaft (2) coupled to the vehicle wheels, an epicyclic mechanism (10) having four shafts (1, 2, 3, 4) and two hydrostatic machines having variable displacement (Cy3, Cy4) and co-operating with two (3, 4) of the aforementioned four shafts, the transmission being of the kind in which the epicyclic mechanism (10) has two trains (11, 12) and four shafts (1, 2, 3, 4) and comprises a first train (11) comprising

— a planet-wheel holder connected to the input shaft (1) by a first connection,

— a ring connected to the output shaft (2) and to the planet-wheel holder of the second train (12) by a second connection, and

— a sun wheel connected to the sun wheel of the second train (12) and also to a first hydrostatic machine (3a) by a third connection (13), the second train (12) comprising

— a ring connected to a second hydrostatic machine (4a) by a fourth connection (14) and to the casing by a free-wheel coupling (15) and a hydrokinetic torque converter (6) being connected in series with the heat engine (5) and the input shaft (1) by a fifth connection and a sixth connection respectively, the latter more particularly including a change-over train (7) for use in reversing only;

all the connections being permanent, characterised in that

the transmission is combined with at least one hydropneumatic accumulator (17) to which the hydraulic circuit of the two hydrostatic machines is conditionally connected by two electro-hydraulic distributors (19, 20), the distributors and the variable displacement of the hydrostatic machines are controlled by a suitable electronic computer (21),

the electronic computer (21) is adapted to authorise propulsion of the vehicle by the heat engine (5) alone, by restoring the energy of the hydropneumatic accumulator (17), or by both simultaneously, and to authorise slowing-down by holding back the heat engine alone, by converting the kinetic energy of the vehicle into hydropneumatic energy stored in the hydropneumatic accumulator (17), or by both simultaneously, without the need for any mechanical uncoupling or coupling and

in the hybrid traction phase, the displacement (Cy3, Cy4) of the hydrostatic machines (3a, 4a) are regulated so that the ratio (C4/C3) of the torques (C4 and C3) of the corresponding shafts (4, 3) is very near a point (P2) corresponding to cancellation of the torque (C1) of the input shaft (1), and means are also provided for regulating the speed of the heat engine (5) relative to the speed of the vehicle.

2. A transmission according to claim 1, characterised in that the regulating means acts on the supply of the heat engine (5), inter alia on the injection pump.

3. A transmission according to claim 1, characterised in that the regulating means comprises the computer (21) itself, which acts so as to displace the operating point slightly beyond the point (P2) corresponding to exact cancellation of the torque (C1) of the input shaft (1).

4. A transmission according to any of the preceding claims, characterised in that the torque converter (6) interposed between the heat engine (5) and the inout shaft (1) of the epicyclic mechanism (10) comprises in known manner a bridging device comprising a controlled clutch which operates when the relative slip between the two components of converter (6) falls to a minimum value, and during each starting operation the various phases of restoration and recovery of energy actuated by the electronic computer (21) occur only after the bridging clutch comes into operation.

## FIG.1

## FIG.2

## FIG.3

## FIG.5

# FIG.4

# FIG.6